(19) Europäisches Patentamt
European Patent Office
Office européen des brevets

(11) **EP 3 166 241 B1**

(12) # EUROPEAN PATENT SPECIFICATION

(45) Date of publication and mention
of the grant of the patent:
**26.09.2018 Bulletin 2018/39**

(51) Int Cl.:
**H04J 3/06** *(2006.01)*          **H04L 12/26** *(2006.01)*
**H04J 3/14** *(2006.01)*          *H04L 7/10* *(2006.01)*
*H04L 12/40* *(2006.01)*

(21) Application number: **15193174.8**

(22) Date of filing: **05.11.2015**

(54) **MONITORING CLOCK SYNCHRONIZATION STATUS IN AN ETHERNET-BASED NETWORK**

ÜBERWACHUNG DES UHRENSYNCHRONISIERUNGSZUSTANDES IN EINEM ETHERNET-BASIERTEN NETZWERK

SURVEILLANCE DE L'ÉTAT DE SYNCHRONISATION D'HORLOGE DANS UN RÉSEAU ETHERNET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.05.2017 Bulletin 2017/19**

(73) Proprietor: **ROBERT BOSCH GMBH**
**70442 Stuttgart (DE)**

(72) Inventor: **Diarra, Aboubacar**
**71706 Markgroeningen (DE)**

(56) References cited:
**US-A1- 2010 091 760      US-A1- 2010 111 113**
**US-A1- 2015 134 764**

• **KOPETZ H ET AL: "The Time-Triggered Ethernet (TTE) Design", OBJECT-ORIENTED REAL-TIME DISTRIBUTED COMPUTING, 2005. ISORC 2005. EIG HTH IEEE INTERNATIONAL SYMPOSIUM ON SEATTLE, WA, USA 18-20 MAY 2005, PISCATAWAY, NJ, USA,IEEE, 18 May 2005 (2005-05-18), pages 22-33, XP010801230, DOI: 10.1109/ISORC.2005.56 ISBN: 978-0-7695-2356-9**

**Description**

Prior art

The present invention relates to monitoring the clock synchronization status of an Ethernet-based network, wherein the network comprises a master clock and wherein the master clock transmits synchronization messages at network start-up to at least one node in the network.

One challenge in designing a time sensitive system is a common time base. The reason is that communicating devices in a network have different views of the current time, because they generally have different clock characteristics, for instance frequency drift, granularity, etc., and they often have different initial times. This situation leads to intolerable clock deviations in some automotive time- and safety-critical application, because these applications have strong requirements that aim to guarantee a safe car driving, particularly with respect to the whole traffic. Therefore, a strict time handling for in-vehicle networks is required. This is especially important for the interaction of several devices and/or electronic control units within a car, because they all must relay on the same time. Therefore, a time synchronization mechanism is used across the whole network.

IEEE 802.1 AS time synchronization protocol has been specified for establishing a common time base in Ethernet-based networks. It basically works on a master clock acting as a time reference by distributing its timing information to other devices via the network such that they are able to correct and thus synchronize their internal clocks in order to be in conformity with the master clock.

In critical automotive applications, devices handling critical packets or messages must have a common sense of time to avoid any jitter, unexpected delay, and a wrong interpretation of the actual situation which otherwise could cause dramatic consequences on the vehicle behavior. Therefore, it is imperative that a common time base is established in an in-vehicle time and safety critical network at start up time as well as during running time.

As a matter of fact, before transmitting the first time and/or a safety critical packet after network start-up, each sender of critical data has to be aware of the existence of a common time base, in order to avoid the problems mentioned above. KOPETZ H ET AL: "The Time-Triggered Ethernet (TTE) Design", OBJECT-ORIENTED REAL-TIME DISTRIBUTED COMPUTING, 2005. ISORC 2005. EIG HTH IEEE INTERNATIONAL SYMPOSIUM ON SEATTLE, WA, USA 18-20 MAY 2005, PISCATAWAY, NJ, USA,IEEE, 18 May 2005 (2005-05-18), pages 22-33, DOI: 10.1109/ ISORC.2005.56; ISBN: 978-0-7695-2356-9 discloses the preambles of the independent claims.

US2010/0091760 (Yoon; 15-April-2010) discloses a wireless ad-hoc network with packet transmission and time synchronization by synchronization messages. Once time synchronization is performed, nodes send status messages including time information.

Disclosure of the invention

The present invention and in particular the method, the monitoring node, and the Ethernet-based in-vehicle network as defined by the dependent claims, describe a monitoring mechanism for notifying devices that are expected to transmit critical data about the synchronization status of the network. In particular, these devices are informed as soon as a common time base is established throughout the network.

The invention thus improves reliability in safety in-vehicle time-and-safety critical networks. By improving the performance of time-triggered mechanisms like, for example IEEE 802.1 Qbv, the invention improves the logical and temporal determinism of in-vehicle networks, thus improving predictability of the vehicle timing behavior. The invention also facilitates configuration for some Ethernet-based traffic handling mechanisms like time-triggered Ethernet or time aware shaper (IEEE 802.1 Qbv), which require high engineering effort.

Embodiments of the present invention are illustrated by way of example and not limitation in the figures of the accompanying drawings in which like references indicate similar elements and in which:

Figure 1    shows an example of the time distribution mechanism in an Ethernet-based network;

Figure 2    shows an example of an Ethernet-based network topology;

Figure 3    shows the transmission of a synchronization status messages from bridges and switches to the monitoring node;

Figure 4    shows the transmission of a synchronization status messages from critical data senders to the monitoring node;

Figure 5    shows the transmission of network common time status messages from the monitoring node to the critical data sender; and

Figure 6     is a flow chart of a possible embodiment of the inventive method.

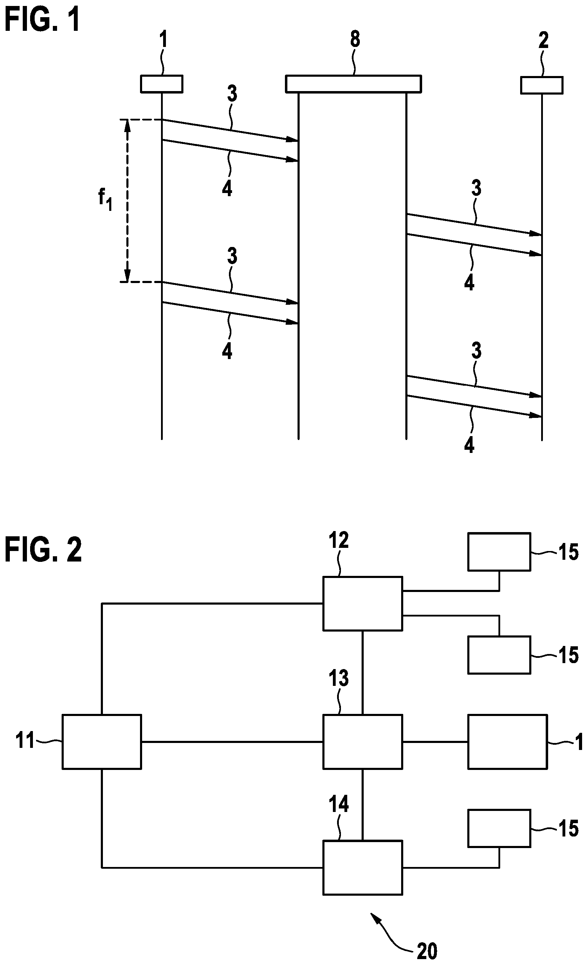

Fig. 1 shows the basic synchronization and time distribution mechanism that is typically used in Ethernet-based in-vehicle network systems. Fig.1 shows the messages that are transmitted from a master node 1, e.g. master clock or grand master, to a bridge node 8.

At time $t_{31}$, master node 1 sends a synchronization message 3 to bridge 8, in particular to a slave port 9 of bridge 8. Time $t_{31}$ is stored at master node 1 and transmitted via a synchronization follow-up message 4 to bridge 8. The synchronization follow-up message 4 comprises for instance an information denoted as *Precise origin time stamp*, that describes the transmission time $t_{31}$ of the synchronization message 3 according to the internal clock of master node 1.

Usually, the synchronization follow-up message 4 comprises at least two further fields, the so-called *correction field* and the so-called *RateRatio.* The correction field is set to 0 and RateRatio is set to 1 in synchronization follow-up messages 4 that are transmitted from the master clock node. With frequency $f_1$, master node 1 again sends a synchronization message 3 to bridge 8.

Upon reception of synchronization message 3, bridge 8 saves the corresponding reception time $t_{32}$. Having received the synchronization follow-up message 4, bridge 8 now can correct its internal clock using the following equation:

$$current\_time\_bridge = t_{31} + pathDelay_{Master\_to\_Bridge} + d_1 \cdot neighborRateRatio_{Master\_to\_Bridge}$$

The *pathDelay* is the propagation time of a message or a frame over the network from one node to another and is determined via the so called peer delay mechanism.

The *neighborRateRatio* is computed to compensate the drift between master and slave clocks. It is calculated by a slave node based on the transmission and reception times of two messages of the same size. For example, two consecutive synchronization messages 3 can be used.

Having adjusted the internal clock, bridge 8 then generates and forwards a synchronization message 3 at time $t_{33}$ to slave node 2. Slave node 2 receives this synchronization message 3 at time $t_{34}$. After that, bridge 8 sends a synchronization follow-up message 4 to slave node 2. Within this synchronization follow-up message 4, the precise origin time stamp is transmitted to slave node 2, and also the neighborRateRatio$_{Master\_to\_Bridge}$ and a *correction field* which is computed based on the following equation:

$$CorrectionField_{Bridge} = pathDelay_{Master\_to\_Bridge} + (t_{33} - t_{32}) \cdot$$

$$neighborRateRatio_{Master\_to\_Bridge}$$

After reception of the synchronization follow-up message 4 that was transmitted from bridge 8, slave node 2 will be able to correct its internal clock using the following equation:

$$Current\_time\_slave = t_{31} + correctionField_{Bridge} + pathDelay_{Bridge\_to\_Slave} + d_2 \cdot$$

$$neighborRateRatio_{Master\_to\_Bridge} \cdot neighborRateRatio_{Bridge\_to\_Slave}$$

Figure 2 shows an Ethernet-based network 20, comprising a master clock 1 and a monitoring node 11. Network 20 further comprises three nodes 12, 13, 14 that act as bridges and/or switches within network 20. Nodes 15 are critical data sender.

It goes without saying, that network 20 is just an example network. Of course, usually there are more nodes and in particular there are devices or nodes that do not send critical data, and there are nodes or devices that receive critical data.

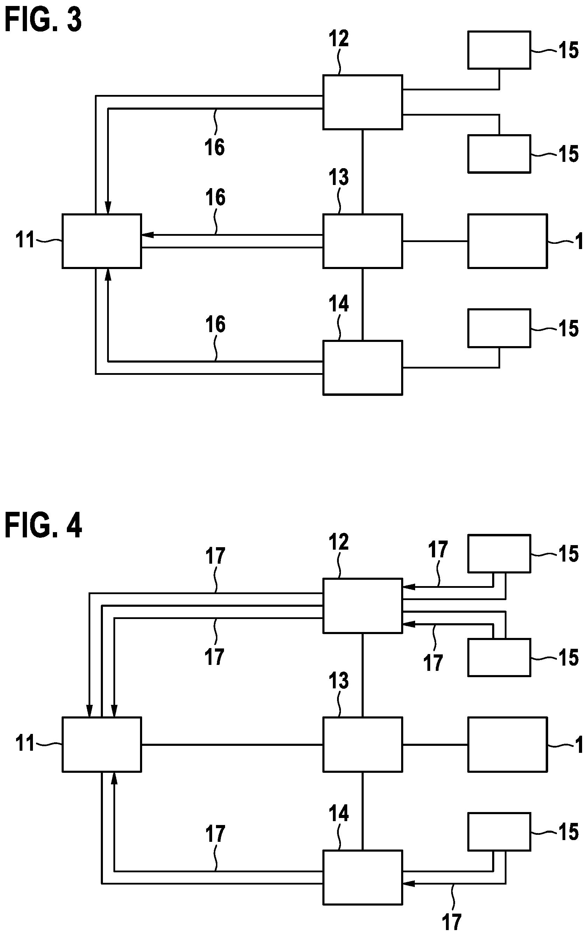

Figure 3 shows a situation in which bridges and/or switches 12, 13, 14 have already received the synchronization messages 3 from master node 1. Furthermore, bridges and/or switches 12, 13, 14 have already adjusted their internal clocks to the master clock.

As shown in figure 3, bridges and/or switches 12, 13, 14 now transmit a synchronization status message 16 to monitoring node 11 in order to notify monitoring node 11 about the fact that bridges and/or switches 12, 13, 14 have now adjusted their internal clock according to the master clock. As described in figure 1, bridges and/or switches 12, 13, 14 are also responsible of forwarding the synchronization messages 3 from master clock 1 to the neighboring or subsequent nodes, thus enabling these nodes to also adjust their internal clocks and forward time information to their neighboring nodes.

Figure 4 shows a situation in which nodes 15 have also adjusted their internal clocks to the reference time of master clock 1. They now send synchronization status messages 17 to bridges and/or switches 12 and 14, which in turn forward these synchronization status messages 17 to monitoring node 11.

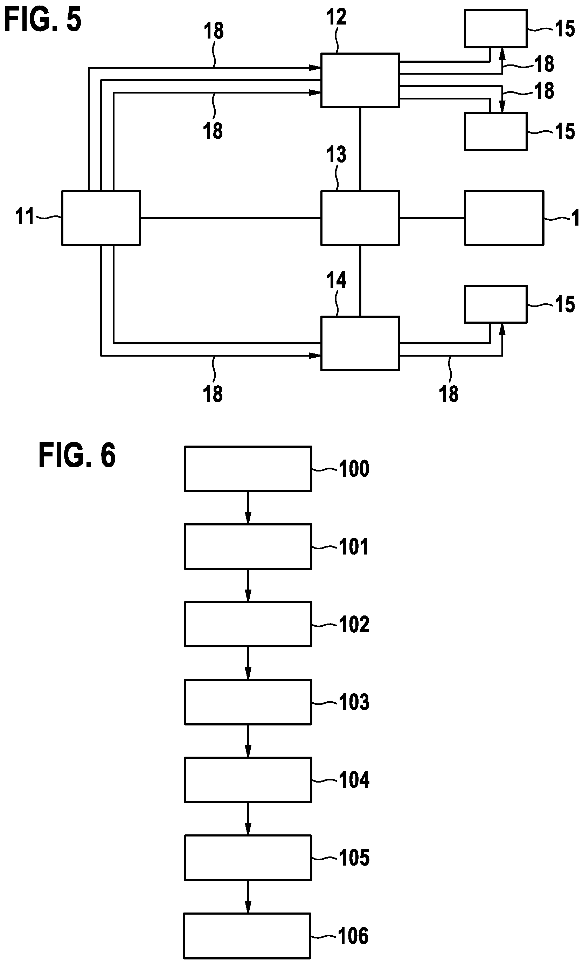

Figure 5 shows a situation in which monitoring node 11 has received synchronization status messages 16 and 17 from all nodes within network 20. Monitoring node 11 now transmits network common time status messages 18 at least to the critical data sender nodes 15. As shown in figure 5, network common time status messages 18 are transmitted to nodes 15 via bridges and/or switches 12 and 14.

Now, all nodes that send critical data are informed about the fact that there is a common time status within the whole network 20. Thus, critical data sender nodes 15 can now start to send their critical data.

The benefit of the described method is that the sender of critical data are informed as soon as a network has a common time base which means that they can transmit their critical data as soon as possible after start-up of the network.

According to a preferred embodiment, the synchronization status message 16, 17 comprise specific data fields. In particular, a specific type of Ethernet frames can be defined for messages relied to common time base establishment monitoring.

Some of the specific fields of the synchronization status messages 16, 17 may comprise:

Message ID: It may be defined on three bits. These bits indicate that a packet is a synchronization status message. The value "001" may be the ID value for this kind of message.

State: This field may be defined on one bit. If this bit is set to "1", then it shows that the node that has sent this message as already adjusted its clock for the first time since network start-up.

Node ID: This field may identify the node that has generated the current synchronization status message. This field may comprise six bytes that represent the MAC address of the originating node.

The network common time status message 18 may also comprise three special fields, for instance:

Message ID: This field may be defined on three bits. It indicates that a packet is a network common time status message. For example "010" is the ID value for this kind of message.

State: This field may be defined on one bit. It is set to "1" whenever the whole network is synchronized.

Node ID: This field identifies the monitoring node 11 and is defined on six bytes and represents the MAC address of monitoring node 11.

Figure 6 shows a flow chart of a possible embodiment of the common time base monitoring mechanism. It starts in a step 100 in which after start-up of the network synchronization messages and follow-up messages (if the network is in a two-step mode) are transmitted from master node 1 to each node in the network as described in figure 1.

In step 101 each node that receives the synchronization message 3 and a synchronization follow-up message 4 adjusts its internal clock.

In step 102 each node having adjusted its internal clock then transmits a synchronization status message 16, 17 to monitoring node 11.

In step 103, monitoring node 11 receives the synchronization status message 16, 17.

In step 104, monitoring node 11 receives the synchronization status messages 16, 17 and waits until each node in the network has transmitted its synchronization status message.

In step 105, monitoring node 11 has received the synchronization status message 16, 17 from each node in network 20 and now transmits a network common time status message 18 at least to the nodes that send critical data over the network.

In step 106, the nodes that receive a network common time status message from monitoring node 11 now start sending critical data or are at least enabled to send critical data.

Of course, network common time status messages 18 can also be transmitted to nodes that do not generate and/or transmit critical messages. For example, these network common time status messages 18 can also be transmitted to nodes that handle critical data. In particular, if all nodes in a network have to be aware of the fact that the network has a common time base the first time after start-up, the common time status messages 18 might be transmitted to all nodes within the network.

**EP 3 166 241 B1**

**Claims**

1. Method for monitoring the clock synchronization status of an Ethernet-based network (20), wherein the network (20) comprises a master clock (1) and wherein the master clock transmits synchronization messages (3) at network start-up to at least one node (8) in the network (20), **characterized in that**

   - upon reception of the synchronization message (3) and synchronizing the internal clock, each node (12, 13, 14, 15) sends a synchronization status message (16, 17) to a monitoring node (11); and
   - after having received synchronization status message from each node (12, 13, 14, 15) within the network (20), the monitoring node (11) sends network common time status messages (18) in order to inform the sender (15) of critical data about the existence of a common time base in the network.

2. Method of claim 1, **characterized in that** the network common time status message (18) is also transmitted to other nodes in network (20).

3. Method of claim 1 or 2, **characterized in that** the synchronization status message (16, 17) comprises a message ID, the status of the clock of the sender of the synchronization status message (16, 17) and a node ID for identifying the sending node (12, 13, 14, 15) of the synchronization status message (16, 17).

4. Method of anyone of claims 1 to 3, **characterized in that** the network common time status message (18) comprises a message ID, the synchronization status of the network (20) and a node ID for identifying the monitoring node (11).

5. Method of anyone of the preceding claims, **characterized in that** the sender (15) of critical data starts sending critical data after receiving the network common time status message (18).

6. Monitoring node (11) in a network (20), wherein the network (20) comprises a master clock (1) and wherein the master clock (1) transmits synchronization messages (3) at network start-up to at least one node in the network (20), **characterized in that** the monitoring node (11) comprises means for

   - receiving synchronization status messages (16, 17) from other nodes (12, 13, 14, 15) in the network (20);
   - detecting whether all nodes (12, 13, 14, 15) in the network (20) have sent an synchronization status message (16, 17); and
   - transmitting a network common time status message (18) to at least one sender (15) of critical data about the existence of a common time base in the network. upon detection that all nodes (12, 13, 14, 15) in the network (20) have sent an synchronization status message (16, 17).

7. Monitoring node (11) of claim 6, characterized that it comprises means for executing a method according to anyone of claims 2 to 4.

8. Ehernet-based in-vehicle network (20) comprising a master clock (1), a monitoring node (11) and means for executing a clock synchronization mechanism at start-up of the network (20), the clock synchronization mechanism comprising the step of sending a synchronization message (3) from the master clock (1) to at least one node (12, 13, 14, 15, 8), **characterized in that**

   - each node (12, 13, 14, 15) comprises means for transmitting a synchronization status message (16, 17) to the monitoring node (11), after having received the synchronization message (3) and having synchronized the internal clock; and
   - the monitoring node (11) comprises means for detecting whether all nodes (12, 13, 14, 15) in the network (20) have sent an synchronization status message (16, 17) and after having received an synchronization status message (16, 17) from all nodes (12, 13, 14, 15) in the network (20), sending a network common time status messages (18) to at least one sender (15) of critical data, wherein the network common time status messages (18) informs the at least one sender (15) of critical data about the existence of a common time base throughout the network (20).

9. Network (20) according to claim 8, **characterized in that** said network (20) is configured for executing a method according to anyone of claims 1 to 5.

10. A computer readable medium comprising computer executable instructions for performing the method of anyone of claims 1 to 5 when executing the instructions on a computer.

**Patentansprüche**

1. Verfahren zur Überwachung des Uhrensynchronisationsstatus in einem Ethernet-basierten Netzwerk (20), wobei das Netzwerk (20) eine Masteruhr (1) umfasst und wobei die Masteruhr beim Netzwerkstart Synchronisationsmeldungen (3) an mindestens einen Knoten (8) im Netzwerk (20) überträgt, **dadurch gekennzeichnet, dass**

   - jeder Knoten (12, 13, 14, 15) beim Empfang der Synchronisationsmeldung (3) und beim Synchronisieren der internen Uhr eine Synchronisationsstatusmeldung (16, 17) an einen Überwachungsknoten (11) sendet; und
   - nachdem er von jedem Knoten (12, 13, 14, 15) innerhalb des Netzwerks (20) eine Synchronisationsstatusmeldung erhalten hat, der Überwachungsknoten (11) für das Netzwerk gemeinsame Zeitstatusmeldungen (18) sendet, um den Sender (15) von kritischen Daten über das Vorhandensein einer gemeinsamen Zeitbasis im Netzwerk zu informieren.

2. Verfahren nach Anspruch 1, **dadurch gekennzeichnet, dass** die für das Netzwerk gemeinsame Zeitstatusmeldung (18) auch an andere Knoten im Netzwerk (20) übertragen wird.

3. Verfahren nach Anspruch 1 oder 2, **dadurch gekennzeichnet, dass** die Synchronisationsstatusmeldung (16, 17) eine Meldung-ID, den Status der Uhr des Senders der Synchronisationsstatusmeldung (16, 17) und eine Knoten-ID zur Identifizierung des sendenden Knotens (12, 13, 14, 15) der Synchronisationsstatusmeldung (16, 17) umfasst.

4. Verfahren nach einem der Ansprüche 1 bis 3, **dadurch gekennzeichnet, dass** die für das Netzwerk gemeinsame Zeitstatusmeldung (18) eine Meldung-ID, den Synchronisationsstatus des Netzwerks (20) und eine Knoten-ID zur Identifizierung des Überwachungsknotens (11) umfasst.

5. Verfahren nach einem der vorhergehenden Ansprüche, **dadurch gekennzeichnet, dass** der Sender (15) kritischer Daten nach dem Empfang der für das Netzwerk gemeinsamen Zeitstatusmeldung (18) mit dem Senden kritischer Daten beginnt.

6. Überwachungsknoten (11) in einem Netzwerk (20), wobei das Netzwerk (20) eine Masteruhr (1) umfasst, und wobei die Masteruhr (1) beim Netzwerkstart Synchronisationsmeldungen (3) an mindestens einen Knoten im Netzwerk (20) überträgt, **dadurch gekennzeichnet, dass** der Überwachungsknoten (11) Mittel umfasst zum

   - Empfangen von Synchronisationsstatusmeldungen (16, 17) von anderen Knoten (12, 13, 14, 15) im Netzwerk (20);
   - Feststellen, ob alle Knoten (12, 13, 14, 15) im Netzwerk (20) eine Synchronisationsstatusmeldung (16, 17) gesendet haben; und
   - Übertragen einer für das Netzwerk gemeinsame Zeitstatusmeldung (18) an mindestens einen Sender (15) kritischer Daten über das Vorhandensein einer gemeinsamen Zeitbasis im Netzwerk, wenn festgestellt wird, dass alle Knoten (12, 13, 14, 15) im Netzwerk (20) eine Synchronisationsstatusmeldung (16, 17) gesendet haben.

7. Überwachungsknoten (11) nach Anspruch 6, **dadurch gekennzeichnet, dass** er Mittel zur Durchführung eines Verfahrens nach einem der Ansprüche 2 bis 4 umfasst.

8. Ethernet-basiertes Fahrzeugnetzwerk (20) umfassend eine Masteruhr (1), einen Überwachungsknoten (11) und Mittel zum Ausführen eines Uhrensynchronisationsmechanismus beim Start des Netzwerks (20), wobei der Uhrensynchronisationsmechanismus den Schritt des Sendens einer Synchronisationsmeldung (3) von der Masteruhr (1) an mindestens einem Knoten (12, 13, 14, 15, 8) umfasst, **dadurch gekennzeichnet, dass**

   - jeder Knoten (12, 13, 14, 15) Mittel zum Übertragen einer Synchronisationsstatusmeldung (16, 17) an den Überwachungsknoten (11) umfasst, nachdem er die Synchronisationsmeldung (3) empfangen und die interne Uhr synchronisiert hat; und
   - der Überwachungsknoten (11) Mittel zum Feststellen, ob alle Knoten (12, 13, 14, 15) in dem Netzwerk (20) eine Synchronisationsstatusmeldung (16, 17) gesendet haben und nachdem sie eine Synchronisationsstatusmeldung (16, 17) von allen Knoten (12, 13, 14, 15) in dem Netzwerk (20) empfangen haben, Senden einer für das Netzwerk gemeinsamen Zeitstatusmeldung (18) an mindestens einen Sender (15) kritischer Daten, wobei die für das Netzwerk gemeinsamen Zeitstatusmeldungen (18) den mindestens einen Sender (15) von kritischen Daten über das Vorhandensein einer gemeinsamen Zeitbasis im gesamten Netzwerk (20) informiert.

9. Netzwerk (20) nach Anspruch 8, **dadurch gekennzeichnet, dass** das Netzwerk (20) zum Ausführen eines Verfahrens nach einem der Ansprüche 1 bis 5 ausgelegt ist.

10. Computerlesbares Medium, umfassend computerausführbare Anweisungen zum Durchführen des Verfahrens nach einem der Ansprüche 1 bis 5, wenn die Anweisungen auf einem Computer ausgeführt werden.

**Revendications**

1. Procédé pour surveiller l'état de synchronisation d'horloge d'un réseau Ethernet (20), dans lequel le réseau (20) comprend une horloge maîtresse (1) et dans lequel l'horloge maîtresse transmet des messages de synchronisation (3) lors d'un démarrage de réseau à au moins un noeud (8) dans le réseau (20), **caractérisé en ce que**

   - lors de la réception du message de synchronisation (3) et de la synchronisation de l'horloge interne, chaque noeud (12, 13, 14, 15) envoie un message d'état de synchronisation (16, 17) à un noeud de surveillance (11) ; et
   - après avoir reçu un message d'état de synchronisation en provenance de chaque noeud (12, 13, 14, 15) dans le réseau (20), le noeud de surveillance (11) envoie des messages d'état de temps commun de réseau (18) afin d'informer l'expéditeur (15) de données critiques concernant l'existence d'une base de temps commun dans le réseau.

2. Procédé selon la revendication 1, **caractérisé en ce que** le message d'état de temps commun de réseau (18) est également transmis à d'autres noeuds dans un réseau (20).

3. Procédé selon la revendication 1 ou 2, **caractérisé en ce que** le message d'état de synchronisation (16, 17) comprend un identifiant (ID) de message, l'état de l'horloge de l'expéditeur du message d'état de synchronisation (16, 17) et un identifiant de noeud pour identifier le noeud d'expédition (12, 13, 14, 15) du message d'état de synchronisation (16, 17).

4. Procédé selon l'une quelconque des revendications 1 à 3, **caractérisé en ce que** le message d'état de temps commun (18) comprend un identifiant de message, l'état de synchronisation du réseau (20) et un identifiant de noeud pour identifier le noeud de surveillance (11).

5. Procédé selon l'une quelconque des revendications précédentes, **caractérisé en ce que** l'expéditeur (15) de données critiques commence l'envoi de données critiques après la réception du message d'état de temps commun de réseau (18).

6. Noeud de surveillance (11) dans un réseau (20), dans lequel le réseau (20) comprend une horloge maîtresse (1) et dans lequel l'horloge maîtresse (1) transmet des messages de synchronisation (3) lors d'un démarrage de réseau à au moins un noeud dans le réseau (20), **caractérisé en ce que** le noeud de surveillance (11) comprend des moyens

   - pour recevoir des messages d'état de synchronisation (16, 17) en provenance d'autres noeuds (12, 13, 14, 15) dans le réseau (20) ;
   - pour détecter si tous les noeuds (12, 13, 14, 15) dans le réseau (20) ont envoyé un message d'état de synchronisation (16, 17) ; et
   - pour transmettre un message d'état de temps commun de réseau (18) à au moins un expéditeur (15) de données critiques concernant l'existence d'une base de temps commun dans le réseau, lors de la détection que tous les noeuds (12, 13, 14, 15) dans le réseau (20) ont envoyé un message d'état de synchronisation (16, 17).

7. Noeud de surveillance (11) selon la revendication 6, **caractérisé en ce qu'**il comprend des moyens pour exécuter un procédé selon l'une quelconque des revendications 2 à 4.

8. Réseau Ethernet embarqué (20) comprenant une horloge maîtresse (1), un noeud de surveillance (11) et des moyens pour exécuter un mécanisme de synchronisation d'horloge lors d'un démarrage du réseau (20, le mécanisme de synchronisation d'horloge comprenant l'étape d'envoi d'un message de synchronisation (3) à partir de l'horloge maîtresse (1) à au moins un noeud (12, 13, 14, 15, 8), **caractérisé en ce que**

- chaque noeud (12, 13, 14, 15) comprend des moyens pour transmettre un message d'état de synchronisation (16, 17) au noeud de surveillance (11) après avoir reçu le message de synchronisation (3) et ayant synchronisé l'horloge interne ; et
- le noeud de surveillance (11) comprend des moyens pour détecter si tous les noeuds (12, 13, 14, 15) dans le réseau (20) ont envoyé un message d'état de synchronisation (16, 17) et après avoir reçu un message d'état de synchronisation (16, 17) en provenance de tous les noeuds (12, 13, 14, 15) dans le réseau (20), pour envoyer des messages d'état de temps commun de réseau (18) à au moins un expéditeur (15) de données critiques, dans lequel les messages d'état de temps commun de réseau (18) informent le ou les expéditeurs (15) de données critiques concernant l'existence d'une base de temps commun à travers le réseau (20).

9. Réseau (20) selon la revendication 8, **caractérisé en ce que** ledit réseau (20) est configuré pour exécuter un procédé selon l'une quelconque des revendications 1 à 5.

10. Support lisible par ordinateur comprenant des instructions exécutables par un ordinateur pour réaliser le procédé selon l'une quelconque des revendications 1 à 5 lors de l'exécution des instructions sur un ordinateur.

## FIG. 1

## FIG. 2

**FIG. 3**

# FIG. 5

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100091760 A, Yoon

**Non-patent literature cited in the description**

- The Time-Triggered Ethernet (TTE) Design. **KO-PETZ H et al.** OBJECT-ORIENTED REAL-TIME DISTRIBUTED COMPUTING, 2005. ISORC 2005. EIG HTH IEEE INTERNATIONAL SYMPOSIUM ON SEATTLE, WA, USA 18-20 MAY 2005. IEEE, 18 May 2005, 22-33